# EUROPEAN PATENT APPLICATION

(11) **EP 0 574 051 A1**
(43) Date of publication of application: **15.12.1993**
(21) Application number: 93201319.6
(22) Date of filing: 07.05.1993
(51) Int. Cl.: B29C 67/22, B01F 15/04, A23G 9/22

(54) **Device for manufacturing foam products**

(30) Priority: 08.05.1992 NL 9200826
(71) Applicant: MONDOMIX HOLLAND B.V., NL-1394 JD Nederhorst den Berg (NL)
(72) Inventor: Den Besten, Christiaan Cornelis Johannes, NL-3631 AA Nieuwersluis (NL)
(74) Representative: Hoijtink, Reinoud

(57) **Abstract**

The invention relates to a device for manufacturing foam products having a desired specific mass at a determined temperature and pressure, with a source for a gas (3), a source of product (1) for foaming or sources of products for foaming, a mixing device (2), the inlet of which is connected to the source or sources for the product for foaming or the products for foaming and the source for the gas, and the outlet of which is connected to a measuring tube (4) with which the specific mass of the foam product in the tube is determined by the movement of the tube, a temperature sensor (9) connected in the vicinity of the measuring tube, pressure gauges (7,8) arranged on either side of the measuring tube, wherein the feed of gas to the mixing device is regulated on the basis of the measured pressure values, the temperature, the specific mass, the flow and density of the product for foaming or products for foaming from the source or sources and the flow of the gas from the gas source.

## Description

The invention relates to a device for manufacturing foam products having a desired specific mass at a determined temperature.

In the production of foam products for consumption purposes and non-consumption purposes, for instance whipped cream, foamed confectionery and foam latex, it is important that the specific mass of the foam product can be well controlled. An example here is the production of chocolate mousse. if the specific mass is not well controlled, the choice of filling weight of a cup of chocolate mousse must err on the side of over-filling. This means using more of the chocolate product for foaming than necessary. A second reason why it is important to keep the specific mass of the foam product well under control is to have control over the quality of the end product. A conceivable example here is the manufacture of latex mattresses. The resilience of a latex mattress is dependent on the specific mass of the latex foam. In order to ensure that the resilience of the mattress meets its specifications it is therefore important to control the specific mass of the latex foam. The existing methods of measuring the specific mass of the foam product are: weighing a filled measuring cup and radiographic measurement of the density of the foam product.

The object of the invention is to provide a device for manufacturing foam products which, without requiring much of the time of operatives, can manufacture a foam product having a desired specific mass at a determined temperature and pressure.

The invention provides for this purpose one or more sources for the product for foaming or the products for foaming, a source for a gas, a mixing device, the inlet of which is connected to the source of the product for foaming or the sources of the products for foaming and the source for the gas, and the outlet of which is connected to a measuring tube set into vibration, a measuring tube with which the specific mass of the foam product in the tube is determined by changing the vibration, a temperature sensor connected in the vicinity of the measuring tube, pressure gauges arranged on either side of the measuring tube, wherein the feed of gas to the mixing device is regulated on the basis of the measured pressure values, the temperature, the specific mass, the flow and the density of the product or products for foaming from the source or sources and the flow of the gas from the gas source. An advantage of this continuous method of measurement and, if necessary, regulation is the immediate response of the device if an undesired foam product is manufactured. With a discontinuous measuring method it takes longer before there is a response, at minimum from the occurrence of the undesired situation until the next measurement. Advantages compared to the weighing of a known volume of the foam product are the more accurate and more hygienic operation of the present device and the possibility of coupling the device to other devices, for instance a writing device. Compared with the radiographic density measurement the proposed device has the advantages that the determining of the specific mass is also possible at a non-constant pressure of the foam product and a radiation source is superfluous.

In preference the value of the measured temperature, pressures, specific mass, flow and density of the product for foaming or the products for foaming and flow of the gas is processed in a computer and the computer generates control signals to control the gas feed to the mixing device. Data processing using a computer is recommended because this is the fastest method of data processing, so that feedback takes place as rapidly as possible.

It is likewise recommended to determine in the computer the mean value of the measured foam pressures on either side of the tube. The advantage of determining the mean value is accurate approximation of the pressure in the measuring tube. Because the pressure in the measuring tube can differ from the pressure at which the foam product is processed, this possible pressure difference has to be taken into account in determining the value of the specific mass in order to be able to determine whether an acceptable foam product is being manufactured. In view of the variation of the pressure in the measuring tube it is desirable to work with a mean value.

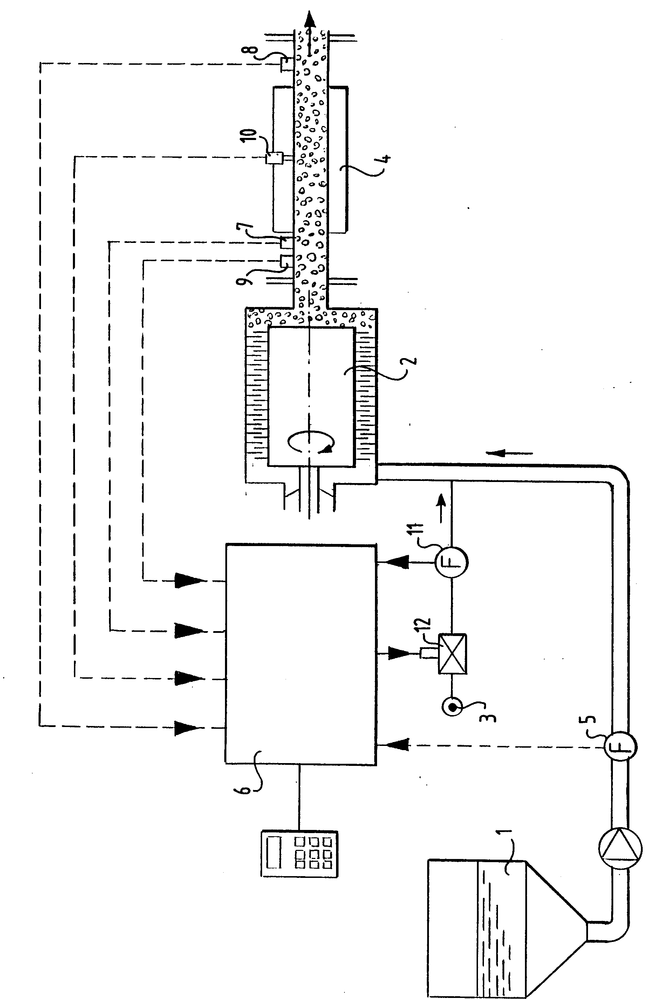

The invention will be further elucidated with reference to the accompanying drawing, wherein:

The figure shows a schematic view of the device for manufacturing foam products.

The source for the product 1 for foaming shown in the figure is connected to the inlet of a mixing device 2. The source of gas 3 is also connected to the inlet of mixing device 2. The outlet of mixing device 2 is connected to a measuring tube 4. The measured values of the flow of the product 5 for foaming are carried to a processing device 6. The values of the measured pressures prior and subsequent to the measuring tube 7, 8, the temperature 9, the specific mass 10 and the flow of the gas 11 are also carried to the processing device 6. The latter now regulates the feed of the gas 12 to the mixing device.

## Claims

1. Device for manufacturing foam products having a desired specific mass at a determined temperature and pressure, with a source (3) for a gas, a source (1) of product for foaming or sources of products for foaming, a mixing device (2), the inlet of which is connected to the source (1) or sources for the product for foaming or the products for foaming and the source (3) for the gas, and the outlet of which is connected to a measuring tube (4) with which the specific mass of the foam product in the tube (4) is determined by the movement of the tube (4), a temperature sensor (9) connected in the vicinity of the measuring tube (4), pressure gauges (7, 8) arranged on either side of the measuring tube (4), wherein the feed of gas to the mixing device (2) is regulated on the basis of the measured pressure values, the temperature, the specific mass, the flow and density of the product for foaming or products for foaming from the source (1) or sources and the flow of the gas from the gas source (3).

2. Device as claimed in claim 1, **characterized in that** the value of the measured temperature, pressures, specific mass, flow and density of the product for foaming or the products for foaming and flow of the gas is processed in a computer (6) and that the computer (6) generates control signals to control the gas feed (12) to the mixing device (2).

3. Device as claimed in claim 1 or claim 2, **characteri****zed in that** in the computer (6) the mean value is determined of the measured gas pressures on either side of the measuring tube (4).

4. Device as claimed in any of the claims 1-3, **charac****terized in that** the measuring tube (4) is a measuring tube set into vibration with which the specific mass of the foam product is determined on the basis of the frequency and the deflection thereof.
